# EUROPÄISCHE PATENTSCHRIFT

(11) **EP 2 528 872 B1**
(45) Veröffentlichungstag und Bekanntmachung des Hinweises auf die Patenterteilung: **04.11.2015**
(21) Anmeldenummer: 11701146.0
(22) Anmeldetag: 28.01.2011
(51) Int. Cl.: C03B 1/02

(54) **HERSTELLUNGSVERFAHREN EINES AGGLOMERIETEN GLASGEMENGES**
PROCESS FOR MAKING AGGLOMERATED GLASS BATCH
METHODE DE FABRICATION D'UN MELANGE VITRIFIABLE AGGLOMERE

(30) Priorität: 28.01.2010 DE 102010001327
(43) Veröffentlichungstag der Anmeldung: 05.12.2012
(73) Patentinhaber: TU Bergakademie Freiberg, 09599 Freiberg (DE)
(72) Erfinder: AL HAMDAN, Khaled, 09599 Freiberg (DE); HESSENKEMPER, Heiko, 09603 Großschirma (DE)
(74) Vertreter: Eisenführ Speiser
(86) Internationale Anmeldenummer: PCT/EP2011/051232
(87) Internationale Veröffentlichungsnummer: WO 2011/092296

(56) Entgegenhaltungen:
- DD-A1- 94 237
- DE-A1- 19 836 869
- FR-A1- 2 568 488
- US-A- 2 970 924
- US-A- 4 081 259
- US-A- 4 188 228
- US-A1- 2006 101 855
- SPARIDAENS A J C M: "BATCH PELLETISATION-THE KEY TO GLASS QUALITY IMPROVEMENT*" GLASS TECHNOLOGY, SOCIETY OF GLASS TECHNOLOGY, SHEFFIELD, GB, Bd. 32, Nr. 5, 1. Oktober 1991 (1991-10-01), Seiten 149-152, XP000237923 ISSN: 0017-1050

## Beschreibung

Die Erfindung betrifft ein Glasherstellungsverfahren gemäß dem Oberbegriff des Anspruchs 1 zur Herstellung von Glas aus Glasrohstoffen und Scherben aufweisend die Schritte des Bereitstellens der Glasrohstoffe in Form eines Gemenges und des Zerkleinerns der Scherben zu Feinscherben, sowie des Mischens des Gemenges und der Feinscherben zu einem Standardgemenge und Agglomerieren des Standardgemenges.

Die Herstellung von Glaskörpern, insbesondere Floatglas (Flachglas) oder Hohlglaskörpern (Behälterglas), als Massenware hat ein hohes Potential an Energieeinsparungsmöglichkeiten und Prozessoptimierung, wie dies z. B. in DD 94237 beschrieben ist. Bei der Glasherstellung hat sich mittlerweile der Einsatz von Scherben mit vergleichsweise hohem Anteil, insbesondere in der Behälterglasindustrie, etabliert. Dies macht bisher bekannte Ansätze zur Reduzierung eines Energiebedarfs und zur Optimierung des Glasherstellungsprozesses, wie sie beispielsweise in dem Artikel von Krasheninnikova et al. in Glass and Ceramics 61, Seite 5 - 6 (2004) oder Tomoyuki et al. in Material Integration Vol. 21, Nr. 04 (2008) ohne Berücksichtigung der Scherbenthematik beschrieben sind, überholt. Es hat sich nämlich gezeigt, dass der Einsatz von Scherben zusätzlich zu den Glasrohstoffen in einem zum Schmelzen vorgesehenen sogenannten losen Standardgemenge ein schnelleres Aufschmelzen sowie einen geringeren Energiebedarf etc. ermöglicht. Darüber hinaus ergeben sich jedoch weitere Anforderungen beziehungsweise Probleme bei Standardgemengen mit vergleichsweise hohem Fremdscherbenanteil. So ergeben sich neben Auswirkungen des Fremdscherbenanteils auf das Redoxverhalten sowie auf Läuterprozesse, insbesondere Homogenitätsstörungen und Festigkeitsverluste durch einen Fremdscherbenanteil. Diese werden vor allem durch im Fremdscherbenanteil enthaltene schwer auflösbare Verunreinigungen wie Keramiken, Steine und Porzellan (KSP) verursacht. Die Verringerung der Festigkeit durch KSP stellt dabei ein Hindernis zur Herstellung von insbesondere dünnwandigen Glaskörpern, insbesondere Behälterglas, dar und behindert somit eine grundsätzlich erzielbare Kostenreduzierung durch den Einsatz von Fremdscherben.

Es ist vorgeschlagen worden, insbesondere zur Verbesserung der Homogenität und der Festigkeit von Glaskörpern, die Scherben (Fremdscherben) inklusive darin enthaltener Verunreinigungen zu zerkleinern, beispielsweise durch autogenes Mahlen, wie dies in den Artikeln von Glüsing et al. "Auflösungsverhalten von keramischen und metallischen Verunreinigungen aus Recyclingscherben während der Glasschmelze" (RWTH Aachen) ISB 3-86130-394-9 oder Führ et al. "Neue Technologie beim Altglasrecycling: die Glasvermahlung", Glasteeh. Ber. Glass Sci. Technol. 68 (1995), Nr. 5, beschrieben ist. Jedoch ergeben sich weitere Probleme infolge der durch Feinscherben verursachten Verstaubung in der Glasschmelzwanne. Zudem kann die Bildung von Schaum oder eine Verstopfung der Gaskanäle problematisch sein; damit ist üblicherweise die Bildung einer schwer gasdurchlässigen Schicht im Einschmelzbereich verbunden, was wiederum zu einer Verschlechterung des Schmelzverhaltens führt.

GB 1 036 477 offenbart ein Verfahren der Eingangs genannten Art zur Behandlung von Rohglasmaterial, welches leicht flüchtige Bestandteile beinhaltet. Verfahrensgemäß wird nur ein Additivmaterial, namentlich Selen, mit pulverisierten Scherben unbestimmter Korngröße gemischt und unter Zusatz von Bindemittel gesintert. Dies geschieht vor dem Hintergrund der Reduzierung der Verdampfung flüchtiger, insbesondere giftiger Gemengebestandteile und damit der Reduzierung des Verlustes dieser Bestandteile beim Einschmelzen. Das gesinterte Material wird in einem Beispiel zu 6 Teilen mit 60 Teilen unveränderten Glasrohstoffen und 34 Teilen unveränderten Scherben gemischt. Die resultierende Mischung wird geschmolzen.

In FR 2 568 488 wird ein Verfahren zur Aufarbeitung von wiedergewonnenem Haushaltsund Industrieglas als Ausgangsmaterial für Glasöfen offenbart. Wiedergewonnenes Glas wird in ein Mahlwerk gegeben und das mahlbare Material (Glas etc.) wird auf eine Partikelgröße kleiner als 500 Mikrometer gemahlen. Die Partikel werden mit Natriumkarbonat und/oder Kalk in einem Granulierer gemischt, um Kugeln mit Durchmessern von 3 bis 5 Millimetern zu erhalten. US 4,188,228 offenbart Glas Pellets zur Verwendung für die Herstellung von Glas zur Produktion von Faserglas. Ein Anteil der Pellets besteht aus Glasfaser Bruchglas von 5 bis über 35 Gewichts-%. Das Glasfaserbruchglas wird in einer Walzenmühle auf eine Korngröße von 44-250 Mikrometer zerkleinert und mit weiteren Glasrohstoffen, wie Borsäure, gemischt. Das Gemenge wird in einem Pelletierteller unter Zugabe von 15 Gewichts-% Wasser zu Pellets geformt. Die Pellets werden in einem Ofen getrocknet bis der Wasseranteil der Pellets unter 1% ist. Die geschmolzenen Pellets sind nutzbar, um Glasfasern zu ziehen.

US 2,970,924 offenbart ein Glasgemengeherstellungsverfahren gemäß der eingangs genannten Art. Dabei werden Glasrohstoffen, wie Sand, Soda, Kalk, Borax oder Blei-Komponenten, mit Scherben und mit sauren Lignosulfonat-Salzen (0.05 bis 2%) und Wasser (8-10%) gemischt, um ein Gemenge zu erzeugen. Feingemahlene Glasscherben können auch hinzugefügt werden. Um Pellets herzustellen wird das Glasgemenge in einer Trommel oder einer rotierbaren Pelletierungsmaschine pelletiert.

Es hat sich gezeigt, dass bisherige Maßnahmen zur Reduzierung des Energiebedarfs beim Glasschmelzprozess unter Erhalt einer ausreichenden Homogenität, insbesondere auch Festigkeit, für einen Glaskörper bei Einsatz von Feinscherben noch verbesserungswürdig sind. An dieser Stelle setzt die Erfindung an, deren Aufgabe es ist, in verbesserter Weise ein Glasherstellungsverfahren anzugeben, bei dem unter Einsatz von Feinscherben der Energiebedarf eines. Glasherstellungsprozesses zur Herstellung eines Glaskörpers gering gehalten ist. Insbesondere soll ein hohes Maß an Homogenität, insbesondere auch Festigkeit, beim Glaskörper erzielbar sein. Dies soll insbesondere für die Herstellung von dünnwandigen Glaskörpern gelten.

Betreffend das Glasherstellungsverfahren wird die Aufgabe durch die Erfindung mittels eines Glasherstellungsverfahrens der eingangs genannten Art gelöst, bei dem erfindungsgemäß die Merkmale des Anspruchs 1 vorgesehen sind.

Unter Glasrohstoffe sind glasbildende Rohstoffe zu verstehen, aus denen das Glas zu ganz überwiegendem Teil hergestellt wird. Die Erfindung geht von der Überlegung aus, dass es bei einem Glasherstellungsverfahren zur Herstellung von Glas aus Glasrohstoffen eines Glasrohstoffgemenges, insbesondere in Form eines Alkali und/oder Erdalkali-Karbonhaltigen Glasrohstoffgemenges, und Scherben zum Erreichen eines ängemessenen Energieeinsparpotentials erforderlich ist, Scherben mit wesentlichem oder vergleichsweise hohem Anteil einzusetzen und diese zu Feinscherben zu zerkleinern. Die Erfindung geht weiter von der Überlegung aus, dass ein Mischen der Glasrohstoffe und der Feinscherben zu einem noch losen Standardgemenge sinnvoll ist, welches dann einem Glasschmelzprozess zugeführt wird. Durch das Mischen wird das Standardgemenge zunächst homogenisiert, dies unter Zugabe eines Bindemittels.

Die Erfindung hat erkannt, dass es zu einer weiteren Erhöhung des Snergieeinsparpotentials als auch zur Vermeidung von mit dem Einsatz von Feinscherben verbundenen Problemen vorteilhaft ist, die Packungsdichte des Standardgemenges zu erhöhen und damit ganz allgemein das Einschmelzverhalten des Standardgemenges zu verbessern. Es wird vorgeschlagen, einen Schritt des Agglomerierens des Standardgemenges vor dem Einschmelzen durchzuführen, wobei erfindungsgemäß ein Zerkleinern der Scherben zu Feinscherben mit einer maximalen Korngrößen unterhalb von 2 mm erfolgt, das gesamte Standardgemenge agglomeriert wird und der Schritt des Agglomerierens durch Kompaktieren des Standardgemenges durch Walzpressen in einer Walzpresse unter Verdichten des Standardgemenges bis zu einer Rohdichte des einzelnen Granulatpartikels im Bereich zwischen 1,4 und 2,5 g/cm³ erfolgt, wobei das Standardgemenge mit einem Feuchtigkeitsgehalt unterhalb 5 % agglomeriert wird und ohne Trockenschritt für das agglomerierte Standardgemenge, dieses danach geschmolzen wird.

Vorteilhafte Weiterbildungen der Erfindung sind den Unteransprüchen zu entnehmen und geben im Einzelnen vorteilhafte Möglichkeiten an, das oben erläuterte Konzept im Rahmen der Aufgabenstellung sowie hinsichtlich weiterer Vorteile zu realisieren.

Als besonders vorteilhaft hat sich ein Agglomerieren beispielsweise als Aufbaugranulierung in feuchter oder trockener Form zur Bildung von Granulen erwiesen. Zusätzlich oder alternativ kann auch eine Pressagglomeration, z. B. durch ein sogenanntes Formpressenoder dergleichen mit oder ohne Hitzeeinwirkung, zur Bildung von Pellets erfolgen. Gegebenenfalls kann auch ein Sintern zum Agglomerieren des Standardgemenges sinnvoll sein. Grundsätzlich kann das Standardgemenge also z. B. granuliert, pelletiert, brikettiert oder tablettiert oder gesintert oder durch andere Weise sinnvoll agglomeriert werden. Als besonders geeignet hat sich ein Agglomerieren mit einem Granulierteller, einem Intensivmischer, einer Drehtrommel, einem Drehrohrofen oder einer Pelletierpresse erwiesen - also zusätzlich zum Agglomerieren ein starkes Verdichten des Standardgemenges. Erfindungsgemäß wird das Kompaktieren durch Walzpressen erreicht. Auch dies kann unter Einsatz von Feuchte und/oder Hitze erfolgen, wobei bevorzugt eine energieintensive Sinterung vermieden ist. Anschließend kann - sowohl beim Agglomerieren als auch Kompaktieren - zur Verminderung einer Restfeuchte bei Bedarf ein Trockenschritt erfolgen, in dem eine Restfeuchte eines agglomerierten Standardgemenges reduziert oder ganz beseitigt wird.

Es wurde erkannt, dass durch den Schritt des Agglomerierens des Standardgemenges zumindest die Homogenität des Glases, insbesondere auch seine Festigkeit, verbessert ist.

Es wurde zudem erkannt, dass eine verbesserte Homogenität eines Glases durch die Zugabe eines Bindemittels zum Standardgemenge erreicht werden kann. Die Zugabe eines Bindemittels erfolgt vorteilhaft in Abhängigkeit eines Feuchtegehalts des Standardgemenges. Es wurde erkannt, dass die Zugabe des Bindemittels insbesondere die Festigkeit der durch den Agglomerierungsschritt gebildeten Granulate/Pellets, Presslinge verbessert wird.

Insgesamt kann vorteilhaft nicht nur eine erhebliche Verkürzung einer Restquarzlöse- und Läuterzeit zur Steigerung der Schmelzleistung erreicht werden sondern optional auch eine damit verbundene Reduzierung des Energieverbrauchs des Glasschmelzprozesses durch Agglomerieren des Standardgemenges. Darüber hinaus wurde eine Verbesserung der Homogenität eines Glaskörpers, insbesondere auch dessen Festigkeit erreicht. Außerdem wurde festgestellt, dass der Glasherstellungsprozess insgesamt verbessert ist. So ergibt sich eine Verlängerung der Lebensdauer der Glasschmelzwanne durch Vermeidung der Gemengeverstaubung oder durch Reduzierung der Schmelztemperatur. Die Schaumbildung wird zusätzlich vermindert durch den Einsatz von geeigneten Bindemitteln (Schaumdestabilisierungsmittel wie die hydroxidische Rohstoffe) beim Mischen und/oder Agglomerieren.

Die Erfindung führt zur Herstellung von besonders homogenen, insbesondere festen Glaskörpern.

Eine Weiterbildung führt auf die Verwendung eines Agglomeriermittels in einem Glasherstellungsverfahren, wobei das Agglomeriermittel ausgewählt ist aus der Gruppe bestehend aus: einem Granulierteller, einem Intensivmischer, einer Drehtrommel, einem Drehrohrofen, einer Pelletierpresse, einer hydraulischen Presse oder einer Walze, vorzugsweise einer Walzenpresse.

Unter einer Walzenpresse ist eine spezielle Art von Pressmaschine zu verstehen, bei der das zu agglomerierende Material zwischen zwei drehende Walzen eingebracht wird. Insbesondere drehen die Walzen gegenläufig. Insbesondere kann eine Walze Formmulden, eine Riffelung oder dergleichen Oberflächenrauigkeiten aufweisen.

Insbesondere hat sich für die Realisierung des Konzepts die Wahl bestimmter Korngrößenverteilungen für die Feinscherben als auch für die Glasrohstoffe als sinnvoll erwiesen. Darüber hinaus hat sich die Wahl eines bestimmten Bindemittelanteils sowie bevorzugte Bindemittel zur Weiterbildung des Konzepts als vorteilhaft erwiesen. Eine Feuchtigkeit kann zweckmäßig für das Agglomerieren des Standardgemenges eingestellt werden. Nach dem Agglomerieren kann ein Trockenschritt erfolgen.

Das Konzept hat sich als besonders wirksam zur Herstellung von dünnwandigen und dennoch besonders homogenen, insbesondere festen, Glaskörpern erwiesen.

Das Gemenge weist vorteilhaft Glasrohstoffe auf, die ausgewählt sind aus der Gruppe bestehend aus Dolomit, Soda, Kalk, Quarz. Vorteilhaft sind alle diese Glasrohstoffe in dem Gemenge zusammengeführt. In dem Mischschritt wird das Gemenge gemäß dem Konzept der Erfindung mit den Feinscherben zu dem Standardgemenge gemischt.

Das Konzept erweist sich, wie oben ausgeführt, in einer ersten weiterbildenden Variante als besonders bevorzugt zur Herstellung von Massenglas, wie zum Beispiel Glaskörpern in Form von Floatglas oder Hohlglaskörpern. Dazu wird das Gemenge bevorzugt in Form eines Alkali- und/oder Erdalkali-Karbonhaltigen Gemenges bereitgestellt. Das Konzept der Erfindung hat sich als besonders bevorzugt, insbesondere zur Herstellung von Massengläsern, erwiesen, wenn ein Anteil von Feinscherben am Standardgemenge oberhalb von 20 % liegt. Insbesondere werden die Vorteile des Konzepts mit einem vergleichsweise hohen Feinscherbenanteil am Standardgemenge oberhalb von 50 %, insbesondere bei 70 % und darüber erreicht. Insbesondere kann ein Feinscherbenanteil am Standardgemenge oberhalb von 90 % liegen. Ein besonders bevorzugter Feinscherbenanteil am Standardgemenge liegt zwischen mehr als 70 % und 90 %, insbesondere zwischen 75 % und 90 %.

In einer weiterbildenden zweiten Variante kann das Konzept auch zur Herstellung von Spezialglas genutzt werden. Besonders bevorzugt kann das Gemenge einen Borträger aufweisen. Unter einem Borträger ist insbesondere eine borhaltige Substanz wie beispielsweise Borax oder Borsäure zu verstehen. In einer anderen Weiterbildung der zweiten Variante kann das Gemenge einen Bleiträger aufweisen. Unter einem Bleiträger ist insbesondere eine bleihaltige Substanz wie beispielsweise Bleioxid zu verstehen. Ein Standardgemenge weist im Falle der zweiten Variante vorzugsweise einen eher geringen Anteil von Feinscherben unterhalb 20 %, insbesondere unterhalb 10 % auf. Der Feinscherbenanteil kann zur Herstellung von Spezialgläsern durchaus deutlich unterhalb von 10 %, beispielsweise bei nur 2 % liegen. Spezialgläser können insbesondere zur Herstellung von Glasfasern genutzt werden.

In beiden Varianten kann durch Agglomerieren des Standardgemenges ein aggressiver Einfluss auf die Schmelzwanne beim Einschmelzprozess in zusätzlich vorteilhafter Weise verringert werden.

In einer ersten variierten Weiterbildung kann das Gemenge der Glasrohstoffe als Normal- oder Grobglasrohstoffe ausgebildet sein. Insbesondere ist dazu eine maximale Korngröße von bis zu 3 mm, vorzugsweise von bis zu 1 mm für die Normal- oder Grobglasrohstoffe vorgesehen. In einer besonders bevorzugten Weiterbildung dieser Variante liegt eine maximale Korngröße der Normal- oder Grobglasrohstoffe oberhalb von 0,2 mm. Besonders bevorzugt gelten diese Angaben für Quarz in Form von Sand. Die Wahl der Glasrohstoffe als Normal- oder Grobglasrohstoffe hat den Vorteil, dass eine Staubentwicklung oder Schaumentwicklung durch das Gemenge bzw. beim Bilden der Schmelze weitgehend vermieden bzw. stark reduziert ist.

In einer alternativen variierten Weiterbildung hat es sich als besonders vorteilhaft erwiesen, die Glasrohstoffe des Gemenges als Feinglasrohstoffe auszubilden. Insbesondere weisen Feinglasrohstoffe dazu eine maximale Korngröße von bis zu 0,2 mm auf. Besonders, vorteilhaft sind Feinglasrohstoffe mit einer maximalen Korngröße von bis zu 0,1 mm versehen. Diese Angaben gelten in besonders bevorzugter Weise für die Verwendung von Quarz in Form von Quarzmehl. Im Rahmen dieser variierten Weiterbildung wurde erkannt, dass bei einem Granulieren der Glasrohstoffe mit feinen Scherben unbeabsichtigt eine Reaktion der Alkali-Träger mit den Feinscherben erfolgen kann, wenn bestimmte Bedingungen vorliegen. Um dies völlig auszuschließen, wird gemäß dieser Variante vorgeschlagen, eine verfeinerte Form der Glasrohstoffe, nämlich Feinglesrohstoffe, insbesondere Quarz in Form von Quarzmehl, mit einer maximalen Korngröße von bis zu 0,2 mm, insbesondere von bis zu maximal 0,1 mm, zu verwenden. Die Verwendung von Feinglasrohstoffen hat nicht nur Vorteile im Hinblick der Energieeffizienz bei der Schmelzenbildung, sondern darüber hinaus wird eine unbeabsichtigte Reaktion von Feinglasrohstoffen (Alkali-Träger) mit Feinscherben weitgehend vermieden (z. B. Scherben mit Soda), so dass ein besonders homogener und insbesondere mit vergleichsweise hoher Festigkeit versehener Glaskörper gebildet werden kann. Letztlich kann der Schritt des Agglomerierens eines Standardgemenges bestehend aus Feinscherben und Feinglasrohstoffen die Vorteile des Konzepts sehr effektiv umsetzen.

Eine weitere variierte Weiterbildung sieht vor, dass ein erster Teil von Glasrohstoffen Quarz und Alkaliträger aufweist und ein zweiter Teil von Glasrohstoffen ausgewählt aus der Gruppe Soda, Kalk, Dolomit ist. Vorteilhaft wird zum Bereitstellen des Gemenges von Glasrohstoffen zunächst der erste Teil gemischt und anschließend der zweite Teil zum Mischprodukt des ersten Teils zugemischt. Mit anderen Worten werden die Glasrohstoffe in Form eines Gemenges bereitgestellt, das in einem zweischrittigen Mischverfahren entsteht. Mit Vorteil versehen wird im ersten Mischschritt ein Mischprodukt erstellt, dass sich beim Einschmelzen zur Bildung von vergleichsweise alkalireichen Niedrigviskosen und deshalb vergleichsweise reaktiver Erstschmelzen eignet, in welcher die späteren glasbildenden Reaktionen beschleunigt ablaufen. Ein dazu geeigneter inniger Kontakt zwischen Quarz, insbesondere Sand und/oder Quarzmehl einerseits sowie Alkaliträgern andererseits wird durch Mischen des ersten Teils der Rohstoffe dargestellt. Es hat sich gezeigt, dass dieses Vorgehen besonders vorteilhaft ist, um die Reaktion von Feinglasrohstoffen, nämlich der Alkaliträger, mit Feinscherben weitgehend zu vermeiden und stattdessen ein besonders homogener, gegebenenfalls mit vergleichsweise hoher Festigkeit versehener Glaskörper unter Nutzung von Feinscherben gebildet werden kann. Dies ist Folge einer besonders bevorzugten weiter variierten Weiterbildung, bei der also ein erster Mischschritt die Mischung von Glasrohstoffen umfassend Quarz und Alkäliträger vorsieht, ein zweiter Mischschritt die Zumischung weiterer Glasrohstoffe und dritter Mischschritt die Zumischung von Feinscherben zur Bildung eines Standardgemenges vorsieht.

In einer Weiterbildung ist der Schritt des Agglomerierens des Standardgemenges bis zu einer mittleren Partikelgröße von mindestens 1 mm, insbesondere im Bereich von 2-12 mm vorteilhaft. Eine Rohdichte eines einzelnen Granulats kann im Bereich zwischen 1,4 und 2,1 g/cm³ vorteilhaft erreicht werden.

Für den Schritt des Agglomerierens haben sich die Verwendung eines Granuliertellers, eines Intensivmischers, einer Drehtrommel, eines Fallmischers, eines Drehofens, einer Pellitierpresse, einer hydraulischen Presse oder Walze oder eines Sprühtrockners als vorteilhaft und sinnvoll erwiesen.

Zum Agglomerieren hat sich ein Granulierteller, insbesondere mit einem Abstreifwinkel zwischen 20 - 90°, insbesondere bei etwa 70°, als vorteilhaft erwiesen. Ein Tellerwinkel des Granuliertellers liegt vorzugsweise im Bereich zwischen 20 und 70°, insbesondere bei etwa 45°. Eine Drehgeschwindigkeit des Granuliertellers zur Bildung des Granulats beim Schritt des Agglomerierens des Standardgemenges liegt bei vorteilhaft 10 - 70 U/min, insbesondere bei etwa 24 U/min. Ein Feuchtigkeitsgehalt des Granulats kann zweckmäßig je nach Wahl des Bindemittels beeinflusst werden; z.B. liegt dieser zwischen 10 - 16 %. Der Feuchtigkeitsgehalt ergibt sich durch Zusatz von H₂O bei einer Temperatur von etwa 40 °C. Die durch das erfindungsgemäße Konzept und/oder einer der Weiterbildungen benannten Vorteile lassen sich besonders vorteilhaft mit einer Granulierzeit zwischen 5 - 10 Minuten erreichen, wobei kürzere Granulierzeiten bevorzugt sind.

Zusätzlich oder alternativ kann ein Agglomerieren des Standardgemenges auch durch Herstellen eines Granulats mit Hilfe eines Intensivmischers erfolgen. Dabei hat sich insbesondere die Wahl einer Wirbelrumdrehungsgeschwindigkeit des Mischers zwischen 10 - 900 U/min als vorteilhaft erwiesen. Eine Tellerumdrehungsgeschwindigkeit beim Intensivmischer liegt vorteilhaft zwischen 32 und 84 U/min. Als Füllüngsgrad des Intensivmischers hat sich als besonders vorteilhaft ein Maß zwischen 5 - 70 % herausgestellt. Die Temperatur von H₂O bei Zugabe desselben liegt vorteilhaft zwischen 20 und 100 °C. Ein Feuchtigkeitsgehalt des Granulats liegt bei 13 - 16 %. Die mit dem Konzept der Erfindung und einer der Weiterbildungen erzielbaren Vorteile lassen sich vorteilhaft bei einer Agglomerierzeit zwischen 10 Minuten erreichen.

Des Weiteren lässt sich ein Schritt des Agglomerierens des Standardgemenges vorteilhaft zur Herstellung eines Granulats mit Hilfe einer Drehtrommel erreichen. Vorteilhaft liegt der Trommelwinkel der Drehtrommel bei 20 - 70°, vorteilhaft bei etwa 45°. Die Drehzahl der Trommel liegt bei etwa 10 - 70 U/min. Ein Feuchtigkeitsgehalt des Granulats kann zweckmäßig je nach Art des gewählten Bindemittels eingestellt werden. Die Zugabe von Wasser erfolgt vorteilhaft mit einer Temperatur von 40 °C. Dies führt regelmäßig zu einem Feuchtigkeitsgehalt des Granulats zwischen 10 - 16 %. Die mit dem Konzept der Erfindung oder einer der Weiterbildungen erzielbaren Vorteile lassen sich vorteilhaft bei einer Granulierzeit zwischen 5- 10 Minuten erreichen.

Der Schritt des Agglomerierens des Standardgemenges kann auch durch Einsatz eines Drehrohrofens erreicht werden. Vorteilhaft weist der Drehrohrofen eine Drehzahl von etwa 30 - 50 U/min und Rohrwinkel bei 5-35° auf, vorteilhaft bei 10°. Der Drehrohrofen wird bei einer Temperatur von mindestens 100 °C betrieben.

Als vorteilhaft für ein Kompaktieren des Standardgemenges hat sich insbesondere der Einsatz einer Pelletierpresse mit einer Umdrehungsgeschwindigkeit bei etwa 30 - 120 U/min, vorteilhaft bei 90 U/min erwiesen. Die Kompaktierung des Gemenges kann auch mit einer hydraulischen Presse oder Walze mit einem Pressdruck von mindestens 5 MPa zum Erreichen der mit dem erfindungsgemäßen Konzept oder einer der Weiterbildungen erzielbaren Vorteile betrieben werden.

Besonders bevorzugt erfolgt ein Verdichten des Standardgemenges bis zu einer Rohdichte des einzelnen Granulatpartikels im Bereich zwischen 1,4 und 2,1 g/cm³. Vorteilhaft kann die Rohdichte auch bis zu 2,3 g/cm³, erfindungsgemäß bis zu 2,5 g/cm³ betragen. Eine weitere Erhöhung der Rohdichte führt zu einer stärkeren Tendenz eines Einsinkens der Granulatpartikel in der Schmelze beim Einschmelzvorgang.

Generell hat es sich als vorteilhaft erwiesen, das Standardgemenge mit einem Bindemittel zu versehen, insbesondere wie dies in den Unteransprüchen alleine oder in Kombination beansprucht ist. Dies hat sich insbesondere bei der Herstellung von Massengläsern als vorteilhaft erwiesen. Darüberhinaus kann, insbesondere bei der Herstellung von Spezialgläsern, eine Kornbeschaffenheit der verwendeten Gemenge, insbesondere des Standardgemenges derart sein, dass der Zusatz eines Bindemittels und/oder Feuchtigkeit, praktisch entfallen kann. Erfindungsgemäß wird das Standardgemenge mit einem Feuchtigkeitsgehalt unterhalb 5 %, insbesondere unterhalb 3 %, agglomeriert und/oder ohne Bindemittel agglomeriert. Besonders bevorzugt kann dies in einer Walzenpresse geschehen. Dies verringert den Verfahrensaufwand beim Glasherstellungsverfahren. Insbesondere kann bei vergleichsweise geringem Feuchtigkeitsgehalt des Standardgemenges ein Trockenschritt vor dem Einschmelzvorgang entfallen.

Insgesamt sieht das Konzept das Agglomerieren des gesamten Standardgemenges mit den vorgenannten Vorteilen vor, insbesondere zur Herstellung von vergleichsweise homogenem Glas mit vergleichsweise verbesserter Festigkeit. Das agglomerierte gesamte Standardgemenge wird bevorzugt bis auf einen gegebenenfalls erforderlichen Trockenschritt praktisch unverändert, unmittelbar danach in eine Schmelzwanne gegeben und darin geschmolzen.

Ausführungsbeispiele der Erfindung werden nun nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in der Zeichnung sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Weitere Vorteile, Merkmale und Einzelheiten der Erfindung ergeben sich aus der nachfolgenden Beschreibung der bevorzugten Ausführungsbeispiele sowie anhand der Zeichnung. Bemessungsbereichen sollen auch innerhalb der genannten Grenzen liegende Werte als Grenzwerte offenbart und beliebig einsetzbar und beanspruchbar sein. Weitere Vorteile, Merkmale und Einzelheiten der Erfindung ergeben sich aus der nachfolgenden Beschreibung der bevorzugten Ausführungsbeispiele sowie anhand der Zeichnung.

### Im Einzelnen zeigt die Zeichnung in

Fig. 1A eine erste besonders bevorzugte Ausführungsform eines Glasherstellungsverfahrens zur Herstellung von Glas aus Glasrohstoffen und Scherben unter Einsatz von Feinglasrohstoffen und Feinscherben;
Fig. 1B eine vereinfachte zweite Ausführungsform eines Glasherstellungsverfahren für Glas aus Glasrohstoffen und Scherben unter Einsatz von Normal- und Grobglasrohstoffen und von Feinscherben;
Fig. 1C eine dritte besonders bevorzugte Ausführungsform eines Glasherstellungsverfahrens für Glas aus Glasrohstoffen und Feinscherben, wobei die Glasrohstoffe aus einem 2-Schritt-Mischprozess bereitgestellt werden;
Fig. 2 eine Graphik zur Verdeutlichung des Einflusses der Granulierung des Standardgemenges mit Feinscherben beim Schritt des Agglomerierens des Standardgemenges auf die Restquarzlösezeit und Läuterung gemäß einer der bevorzugten Ausführungsformen des Glasherstellungsverfahrens;
Fig. 3 eine Graphik zur Verdeutlichung des Einflusses des Pressens des Standardgemenges mit feinen Scherben beim Schritt des Verdichtens auf die Restquar-zlösezeit und Läuterung gemäß einer bevorzugten Ausführungsform des Glasherstellungsverfahrens;
Fig. 4 eine Graphik zur Verdeutlichung des Einflusses der Scherbengröße und der Feinheit der Glasrohstoffe und die Granulation auf das Schmelzverhalten;
Fig. 5 eine Graphik zur Verdeutlichung des Einflusses der Scherbengröße und der Feinheit der Glasrohstoffe und die Granulation auf die Homogenität des Glases.

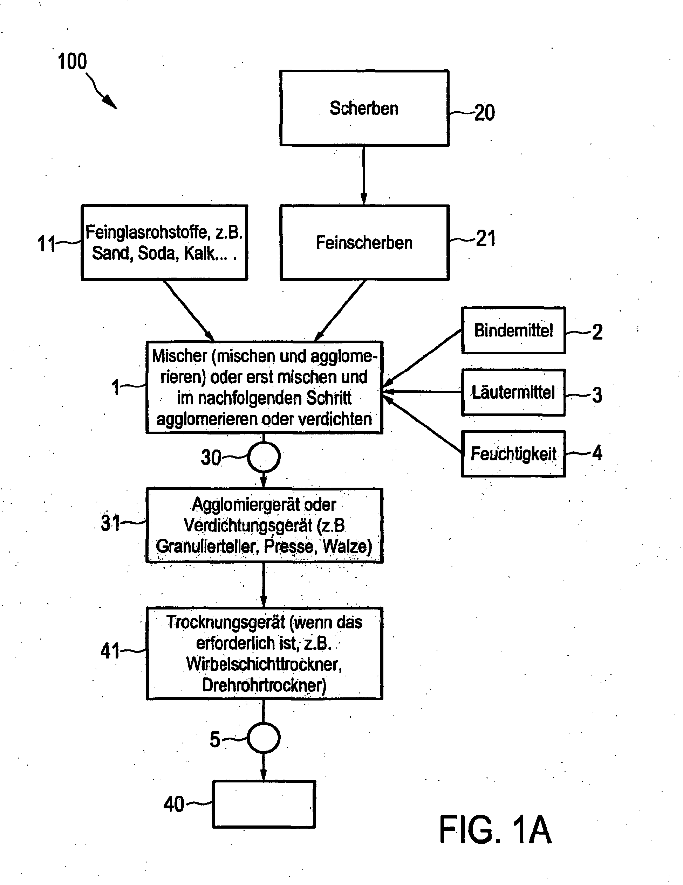

Fig. 1A zeigt eine besonders bevorzugte Ausführungsform eines Glasherstellungsverfahrens 100, zur Herstellung von Glas aus Glasrohstoffen in Form eines Alkali und/oder Erdalkali-Karbonhaltigen Glasrohstoffgemenges und Scherben 20, wobei die Scherben 20 z.B. zunächst in einem nicht näher erläuterten Zerkleinerungsschritt zu Feinscherben 21 zerkleinert werden. Die Glasrohstoffe werden als Feinglasrohstoffe in einem Feinglasrohstoffgemenge 11 zur Verfügung gestellt. Anschließend erfolgt in einem Mischschritt 1 zur Homogenisierung - unter Zugabe von Bindemittel 2, eines Läutermittels 3 und Feuchtigkeit 4 - die Bildung eines Standardgemenges 30. Vor einem Schmelzschritt 5 zur Bildung eines Glaskörpers 40 erfolgt der Schritt des Agglomerierens oder Kompaktierens, d. h. Verdichtens 31 des Standardgemenges 30. Der Feuchtigkeitsanteil beträgt beim Agglomerieren (Granulieren, Pelletieren) ca. 10% und beim Kompaktieren (Pressen, Walzen) ca. 3%. Ein Verdichten kann bereits beim Mischen oder auch erst in einem nachfolgenden Schritt erfolgen.

Ein anschließender Trockenschritt 41 reduziert die Restfeuchte.

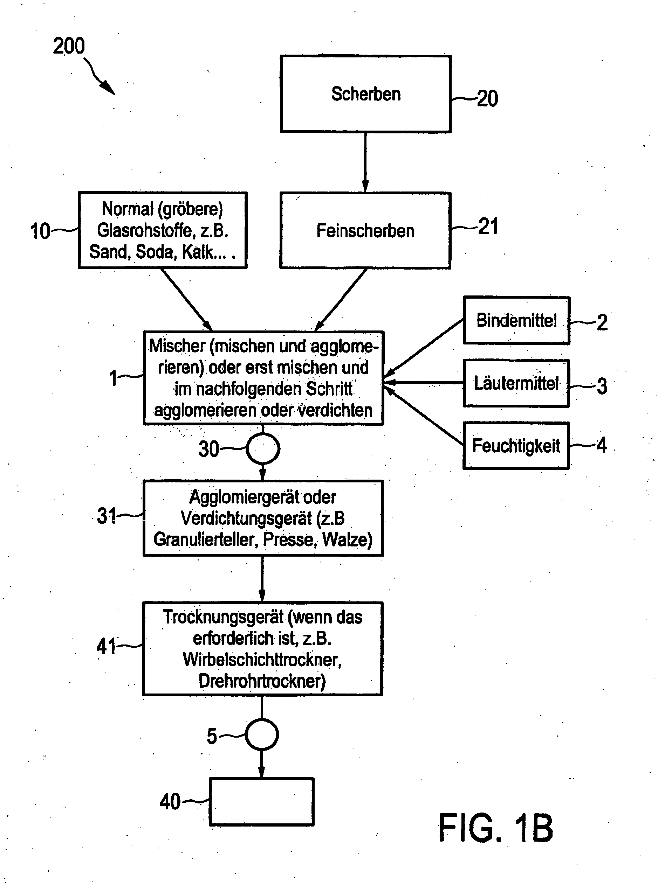

In einem in Fig. 1B dargestellten vereinfachten Glasherstellungsverfahren 200 - bei dem für gleiche oder ähnliche Teile beziehungsweise Teile gleicher oder ähnlicher Funktion der Einfachheit halber gleiche Bezugszeichen verwendet sind - kann eine Verwendung von Feinglasrohstoffen entfallen und stattdessen können gröbere Glasrohstoffe 10 verwendet werden. Die weiteren Verfahrensschritte ergeben sich wie bei Fig. 1A.

In beiden Ausführungsbeispielen weist das Standardgemenge 30 einen in Form von Feinscherben 21 zugesetzten Fremdscherbenanteil von ca. 70 % auf, die aus Fremdscherben, nämlich industriell eingesetzten Scherben, gewonnen sind. Zur Bildung der Feinscherben 21 können die Scherben zunächst gewaschen werden und in einem Grobzerkleinerungsschritt auf Stücke einer mittleren Größe von 3 x 3 cm vorzerkleinert werden. Anschließend erfolgt die Bildung der Feinscherben 21 aus den Scherben 20.

Die mittlere Korngröße der eingesetzten Feinglasrohstoffe 11 (für Fig. 1A) sind in der Tabelle 1A zu sehen und die mittlere Korngröße der eingesetzten Glasrohstoffen 10 (für Fig. 1B) sind in der Tabelle 1B zu sehen. Die Korngröße der Glasrohstoffe 10 (Fig. 1B, Tab. 1B) liegt insgesamt oberhalb der Feinglasrohstoffe 11 (Fig. 1A, Tab. 1A).

**Tab. 1A: mittlere Korngröße der verwendeten Feinglasrohstoffe 11**

| **Rohstoff** | **D₅₀ (mm)** |
|---|---|
| Dolomit | 0,186 |
| Soda | 0,122 |
| Kalk | 0,07 |
| Quarzmehl | 0,1 |
| Scherben | 0,2 |

**Tab.1B: mittlere Korngröße der verwendeten Glasrohstoffe 10 (Normal- bis Grobrohstoffe)**

| **Rohstoff** | **D₅₀ (mm)** |
|---|---|
| Sand | 0,219 - 0,524 |
| Kalk | 0,05 - 0,989 |
| Dolomit | 0,50 - ,79 |
| Soda | 0,122- 0,15 |
| Glasscherben | 0,050 - 0,40 |

Man kann sowohl Feinglasrohstoffe 11 mit Feinscherben 21 im Verfahren 100 oder auch im Verfahren 200 Glasrohstoffe 10 als gröbere Normalrohstoffe mit Feinscherben 21 granulieren. Die hergestellten Granulate aus Feinglasrohstoffen 11 haben eine positive Wirkung auf die Schmelzbarkeit.

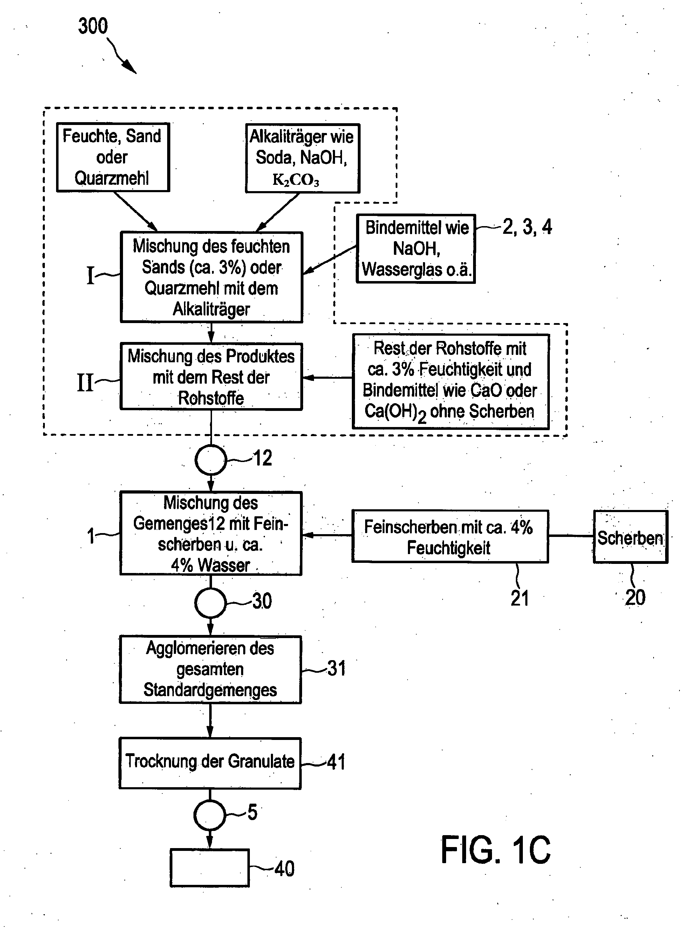

Fig. 1C zeigt ein weiter verbessertes Herstellungsverfahren in einer dritten Ausführungsform, bei welchem die Glasrohstoffe 12 in einem ersten Mischschritt I und in einem zweiten Mischschritt II als Gemenge 12 zur Verfügung gestellt werden. Vorliegend wird ein erster Teil von Glasrohstoffen mit Quarz und Feuchte gebildet. Quarz kann in Form von Sand oder Quarzmehl gebildet sein. Der erste Teil von Glasrohstoffen umfasst auch Alkaliträger wie Soda, NaOH oder K₂CO₃. Vorliegend wird zunächst der erste Teil der Rohstoffe im Mischritt I gemischt. Dazu erfolgt die Mischung von feuchtem Sand oder Quarzmehl, d. h. vorliegend mit einer Feuchte von etwa 3 %, mit dem Alkaliträger. Die Mischzeit beträgt ca. 3 Minuten. Als Mischprodukt des ersten Teils der Glasrohstoffe stellt sich ein erster Gemengeteil mit Quarzkörnern ein, die vom Alkaliträger umhüllt sind. Dies stellt eine besonders innige Verbindung von Quarz und dem Alkaliträger dar und kann eine spätere glasbildende Reaktion beschleunigen.

In einem zweiten Mischschritt wird der erste Gemengeteil mit anderen Rohstoffen, vorliegend Kalk und Dolomit unter Zugabe von 4 % Wasser weiter gemischt. Die Mischzeit beträgt ca. 3 Minuten. Im zweiten Mischschritt II kann die Feuchte auch unter 4 % liegen, wie beispielsweise bei 3 %. In dem Fall hat sich insbesondere die Zugabe eines Bindemittels wie CaO oder CaOH₂ als vorteilhaft erwiesen. Es kann auch Wasserglas oder dergleichen als zusätzliches Additiv zugegeben werden. Auch kann Läutermittel als zusätzliches Additiv beim Mischen zugegeben werden. Sämtliche Additive können beim ersten und/oder zweiten Mischschritt zugegeben werden.

Das so zur Verfügung gestellte Gemenge 12 hat vergleichsweise innige Mischkomponenten aus dem ersten Gemengeteil, nämlich mit Alkaliträger umhüllte Sandkörner. Die vorliegende Ausführungsform nutzt diesen ersten Gemengeteil in vorteilhafter Weise, um des Weiteren eine Mischung mit Feinscherben so durchzuführen, dass unbeabsichtigte Reaktionen mit den Feinscherben unterdrückt bzw. vergleichsweise langsam ablaufen. Dies betrifft auch Reaktionen mit den übrigen Rohstoffen, nämlich insbesondere Erdalkaliträgern, die erst im zweiten Mischschritt II zugemischt werden. Beim Herstellungsverfahren 300 der Fig. 1C kann beim Mischen zum Standardgemenge Feuchtigkeit im Bereich von etwa 4 % zugegeben werden. Vorliegend ist die weitere Zugabe von Additiven nicht erläutert. In einer hier nicht gezeigten abgewandelten Ausführungsform kann jedoch auch beim Mischen I eine Zugabe von Additiven wie Bindemittel, Läutermittel oder dergleichen erfolgen.

Die weiteren Schritte des Agglomerierens 31, Trocknens 41 zur Bildung von Granulen können wie bereits anhand der Ausführungsbeispiele in Fig. 1A und 1B durchgeführt werden. Das nachfolgende Schmelzen 5 zur Bildung eines Glaskörpers 40 führt zu einem besonders homogenen und vergleichsweise festen Glaskörper 40.

Das Herstellungsverfahren 300 hat sich als besonders gut geeignet erwiesen, wenn für den ersten Mischschritt I Quarz und/oder Alkaliträger in vergleichsweise geringer Korngröße vorliegt, d. h. vorzugsweise als Quarzmehl und mit Korngrößen wie sie in Tab. 1A für die Feinglasrohstoffe 11 angegeben sind. Bei dieser Ausführung ist das Herstellungsverfahren 300 besonders effektiv in seiner Wirkung, da eine besonders innige Mischung von Quarz und Alkaliträger erreicht wird. Es kann in einer Abwandlung auch in einem zweiten Mischschritt II der Restrohstoffe mit vergleichsweise feiner Körnung, also wie mit Korngrößen wie sie in Tab. 1A angegeben sind, vorliegen. In einer weiteren Abwandlung kann bei Bedarf auch für alle Glasrohstoffe eine mittlere bis grobe Korngröße, wie sie in Tab. 1B dargestellt ist, vorliegen, dies jedoch mit vergleichsweise geringerem Effekt als bei der Verwendung von feinkörnigem Quarz und Alkaliträger.

Das Konzept der Erfindung wird nachstehend an drei Referenzbeispielen näher erläutert.

### Beispiel 1 -Granulierung der Glasrohstoffe mit Feinscherben

### Beispiel 1.1 - Granulierung in einem Granulierteller

Die Rohstoffe wurden vor der Granulation im Granulierteller (Agglomerieren und Verdichten 31) in einem geeigneten Mischer gemischt (Mischen 1, I, II). Der Granulierteller hat folgende Parameter: Der Abstreifwinkel liegt bei 20 - 90° (optimal 70°). Der Tellerwinkel liegt bei 20 - 70° (optimal 45°). Die Drehgeschwindigkeit liegt bei 10 - 70 U/min (optimal 24 U/min). Der Feuchtigkeitsgehalt hängt von der Art des Bindemittels ab und muss für jedes Gemenge neu bestimmt werden. Der Feuchtigkeitsgehalt befindet sich normalerweise zwischen 10 - 16 %. Die Wassertemperatur beträgt 40 °C. Die Granulierzeit liegt bei 5 - 10 Minuten. Das Standardgemenge aus natürlichen (gröberen) Rohstoffen und Feinscherben inklusive die Alkaliträger wie Soda, K₂CO₃ oder das Gemenge aus Feinglasrohstoffen inklusive die Alkaliträger und Feinscherben mit oder ohne Bindemittel wie CaO, Wasserglas, Ca(OH)₂, NaOH wird während des Granulierens in einem Granulierteller mit Wasser von 40 °C gesprüht oder direkt zu gegeben, bis sich die Granulate mit bestimmter Korngröße gebildet haben. Die Eigenschaften der Granulate sind in Tab. 2 zu sehen.

**Tab. 2: Eigenschaften der im Granulierteller hergestellten Granulate**

| **Probe** | **Rohdichte (einzelne Granulat) g/cm³** | **Druckfestigkeit (MPa)** | **D mm** | **Feuchtigkeit % nach der Granulierung** |
|---|---|---|---|---|
| Basisversatz (Standard) aus natürlichen (gröbere) Rohstoffe und Feinscherben | 1,9 | 0,4 | 4-5 | 14,2 |
| Basisversatz (Standard) aus natürlichen (gröbere) Rohstoffe und Feinscherben mit CaO als CaO- träger | 1,8 | 1,1 | 6-8 | 12 |
| Basisversatz aus feinen Rohstoffen und Feinscherben | 1,6 | 1,2 | 6-7 | 13,5 |
| Basisversatz aus feinen Rohstoffen mit Wasserglas | 1,9 | 1,8 | 9 | 12,7 |
| Basisversatz aus feinen Rohstoffen und Feinscherben mit CaO | 1,7 | 0,9 | 7-8 | 13,5 |
| Basisversatz aus feinen Rohstoffen und Feinscherben (NaHCO₃, 10 % Ca(OH)₂) | 1,6 | 1,2 | 5 | 11,70 |
| Basisversatz aus feinen Rohstoffen und Feinscherben mit (10 % Ca(OH)₂) | 1,8 | 1,6 | 5 | 10 |
| Basisversatz aus feinen Rohstoffen und Feinscherben mit (10 % Ca(OH)₂, 1% K₂ CO₃) | 1,90 | 1,4 | 5 | 11,5 |
| Basisversatz aus feinen Rohstoffen und Feinscherben mit (20 % NaOH) | 1,7 | 2,5 | 6-8 | 10,8 |
| Basisversatz aus feine Rohstoffen und Feinscherben mit (%1 K₂CO₃, 10% Ca(OH)₂, 20% NaOH) | 1,8 | 2,4 | 5-8 | 10,6 |

Die Festigkeit der Granulate aus natürlichen (gröbere) Rohstoffen und Feinscherben ist eher niedrig. Hingegen ist die Festigkeit von den Granulaten aus feinen Rohstoffen und Feinscherben mit Agglomerationshilfsmitteln höher. Die Zugabe von Bindemitteln wie Wasserglas, NaOH, Ca(OH)₂ und/oder CaO verbessert die Festigkeit und erniedrigt die Feuchtigkeit der Granulate. Es kann dazu die Restfeuchtigkeit in einem Trockenschritt 41 gesenkt werden.

### Beispiel 1.2 - Granulierung in einem intensiven Mischer

Die Feinrohstoffe und Feinscherben werden zunächst in einem Intensivmischer homogenisiert (Mischen 1, I, II) und dann in dem gleichen Intensivmischer weiter gemischt und dabei agglomeriert (Agglomerieren 31). Die Tellerumdrehungsgeschwindigkeit beim Intensivmischer liegt vorteilhaft zwischen 32 und 84 U/min. Als Füllungsgrad des Intensivmischers hat sich als besonders vorteilhaft ein Maß zwischen 5 - 70 % herausgestellt. Die Temperatur von H₂O bei Zugabe desselben liegt vorteilhaft zwischen 20 - 100 °C. Ein Feuchtigkeitsgehalt des Granulats liegt bei 13 - 16 %. Die mit dem Konzept der Erfindung und einer der Weiterbildungen erzielbaren Vorteile lassen sich vorteilhaft bei einer Agglomerierzeit von 10 Minuten erreichen. Nach Zugabe von 9 - 17 % Wasser und ca. 10 Minuten Zeit bilden sich die Granulate. Die feuchten Granulate werden im Trockenschrank bei 110 °C getrocknet (Trockenschritt 41). Die Eigenschaften der Granulate sind in Tab. 3 zu sehen.

**Tab. 3: Eigenschaften der im Intensivmischer hergestellten Granulate**

| **Probe** | **Rohdichte (einzelne Granulat) g/cm3** | **Druckfestigkeit (MPa)** | **D mm** | **Feuchtigkeit %** |
|---|---|---|---|---|
| Basisversatz aus feinen Rohstoffen und Feinscherben | 1,8 | 1,1 | <7 | 10,6 |
| Basisversatz aus feinen Rohstoffen und Feinscherben mit 50% CaO/50% Ca(OH)₂ | 2,1 | 2,4 | <4 | 10,2 |
| Basisversatz aus feinen Rohstoffen und Feinscherben mit 10 % Ca(OH)₂ | 1,9 | 2,5 | < 3 | 8,4 |
| Basisversatz aus feinen Rohstoffen und Feinscherben mit (20 % NaOH) | 1,4 | 2,5 | <4 | 9 |
| Basisversatz aus feine Rohstoffen Feinscherben mit 100 % NaOH | 1,8 | 2,4 | <4 | 9,2 |

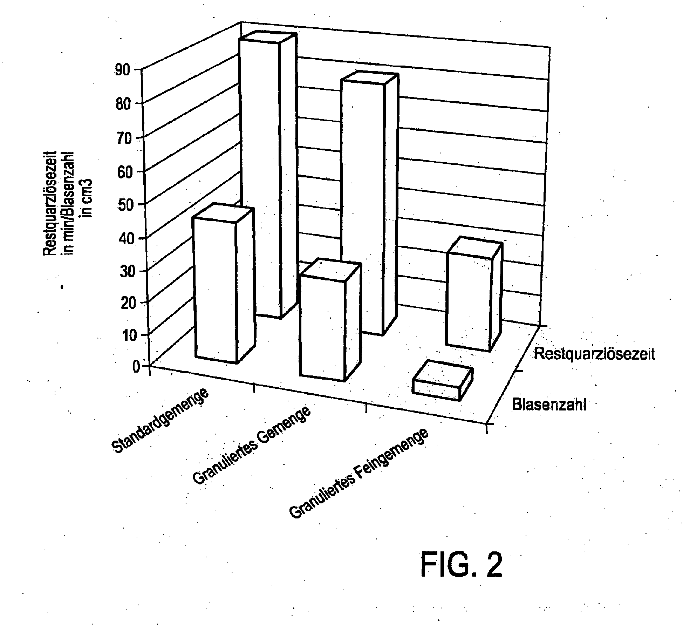

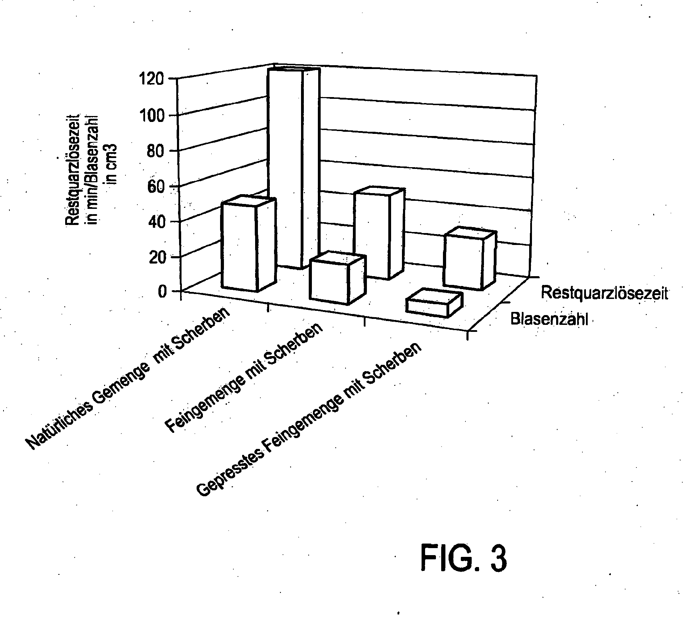

Die Zugabe von Bindemitteln wie Wasserglas, NaOH, Ca(OH)₂ verbessert die Festigkeit und erniedrigt die Feuchtigkeit der Granulate. Insgesamt ist ein Herstellungsverfahren 100, 200, 300 betreffend die erzielbaren Werte vorteilhaft. Dies zeigen die Ergebnisse der Fig. 2, Fig. 4, Fig. 5 für Beispiel 1 und Fig. 3, Fig. 4, Fig. 5 für das nachfolgende Beispiel 2.

Fig. 2 zeigt den Einfluss der Granulierung auf die Restquarzlösezeit und damit auf das Einschmelzverhalten des Gemenges mit feinen Scherben.

Aus dem Diagramm ist zu erkennen, dass der Einfluss der Granulierung von natürlichen (gröberen) Rohstoffen bei hohem Einsatz von Scherben (ca. 70 %) auf die Restquarzlösung vorhanden aber eher gering ist. Der Einsatz von feinen Rohstoffen beim Granulieren unter Einsatz von feinen Scherben verkürzt die Schmelzzeit erheblich.

### Beispiel 2 - Pressen der Glasrohstoffe mit Feinscherben

### Beispiel 2.1 - Pressen des Gemenges aus Feinrohstoffen und Feinscherben

Folgende Gemenge in der Tab. 4 wurden in einem Mischer homogenisiert und anschließend mit einer Kraft von 100 kN (50 MPa) gepresst. Die Feuchtigkeit beträgt in allen Proben 3 %. Die Presszeit beträgt 5 s. Der Durchmesser der Presslinge beträgt 5 cm.

**Tab. 4: Eigenschaften der Presslinge**

| **Gemenge** | **Druckfestigkeit (MPa) (kalt)** | **Druckfestigkeit (MPa) (warm 100°C)** | **Dichte g/cm³** |
|---|---|---|---|
| Basisversatz aus feinen Rohstoffen | 30,52 | 38,94 | 1,9 |
| Basisversatz aus feinen Rohstoffen mit 50% CaO/ 50% Ca(OH)₂ | 44,98 | 44,84 | 2 |
| Basisversatz aus feinen Rohstoffen mit 10 % Ca(OH)₂ | 45 | 44,07 | 1,95 |
| Basisversatz aus feinen Rohstoffen mit (20 % NaOH) | 30,97 | 42,1 | 1,95 |

Die Zugabe von Bindemittel wie Wasserglas, NaOH, Ca(OH)₂ verbessert die Festigkeit der Presslinge.

### Beispiel 2.2 - Laborversuche zum Einfluss des Pressens der feinen Rohstoffe mit Scherben (ca. 70 %) auf das Schmelzverhalten

Fig. 3 zeigt den Einfluss des Pressens des Gemenges mit feinen Scherben auf die Restquarzlösung und Läuterung. Der Einsatz von feinen Rohstoffen beim Granulieren unter Einsatz von feinen Scherben verkürzt die Schmelzzeit erheblich.

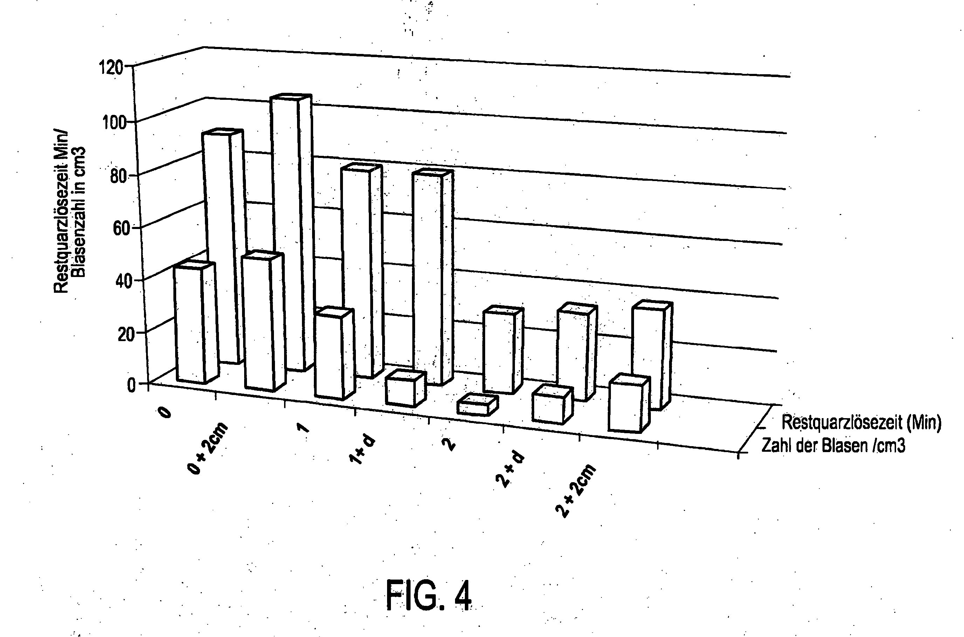

In Fig. 4 wird der Einfluss der Scherbengröße und des Gemenges und der Granulation auf das Schmelzverhalten dargestellt. Als Gemengebeispiel sind gewählt worden:
- 0: Standardgemenge aus gröberen Rohstoffen mit Feinscherben,
- 0 + 2 cm: Standardgemenge aus gröberen Rohstoffen mit 2 cm Scherben,
- 1: Granuliertes Gemenge aus gröberen Rohstoffen mit Feinscherben,
- 1 + d: Granuliertes Gemenge aus gröberen Rohstoffen mit Feinscherben dazu, d. h. die Feinscherben sind nicht mit dem Gemenge granuliert,
- 2: Granuliertes Gemenge aus Feinrohstoffen mit Feinscherben,
- 2 + d: Granuliertes Gemenge aus Feinrohstoffen mit Feinscherben, d. h. die Feinscherben sind nicht mit dem Gemenge granuliert,
- 2 + 2 cm: Granuliertes Gemenge aus Feinrohstoffen dazu 2 cm Scherben, d. h. die Feinscherben sind nicht mit dem Gemenge granuliert.

Diese Beispiele demonstrieren nachhaltig, dass die Granulierung von feinen Rohstoffen mit fein gemahlenen Scherben einen signifikanten Vorteil bezüglich der Restquarzlösung und der Läuterung bietet, womit eine wesentliche Beschleunigung der Schmelzprozesse und damit eine erhebliche Senkung der Glasherstellungskosten erreicht werden kann.

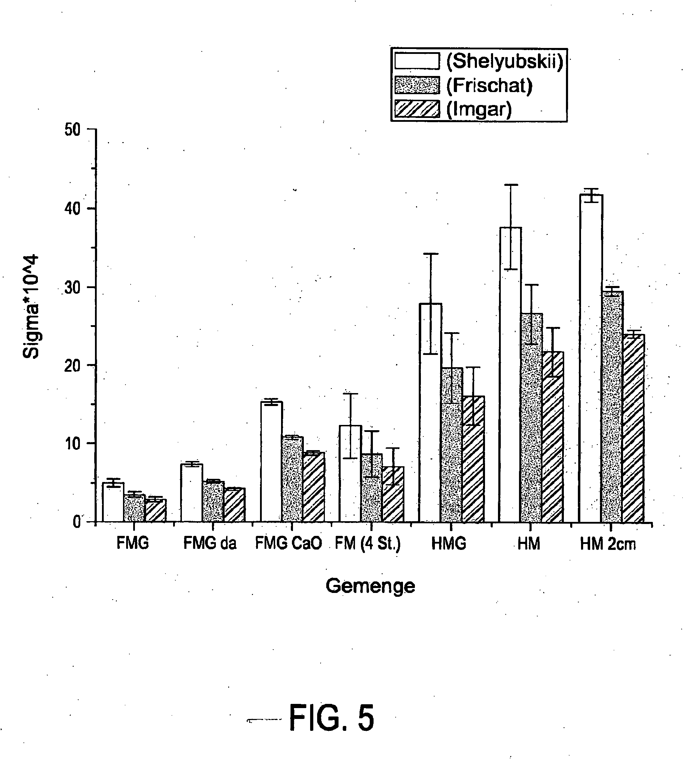

In Fig. 5 ist zu erkennen, dass die Staubbildung oder dergleichen Nachteile beim Einsatz von Feinscherben auf das Schmelzverhalten durch eine Granulation behoben werden können. Damit ist eine gute Vorhomogenisierung des Gemenges gegeben, das zu einer erhöhten Homogenität des Glases führt. Dabei sind Shelyubskii, Frischat, Imgar verschiedene Messverfahren und Sigma präsentiert die Heterogenität des Glases. Als Gemengebeispiele sind gewählt worden:
- HM 2cm: nicht granulierte Standardgemenge aus gröberen Rohstoffen mit 2 cm Scherben,
- HM: nicht granulierte Standardgemenge aus gröberen Rohstoffen mit Feinscherben,
- HMG: granuliertes Gemenge aus gröberen Rohstoffen mit Feinscherben
- FM: nicht granulierte Gemenge aus Feinrohstoffen mit Feinscherben,
- FMG CaO: granuliertes Gemenge aus Feinrohstoffen mit Feinscherben und 50 % CaO als Kalkersatz,
- FMG da: granuliertes Gemenge aus Feinrohstoffen dazu Feinscherben (die Scherben sind nicht mit granuliert),
- FMG: granuliertes Gemenge aus Feinrohstoffen mit Feinscherben.

Es hat sich zur Verminderung von Staub- oder Schaumbildung insbesondere der Einsatz von Bindemittel als vorteilhaft erwiesen. Der positive Einfluss von Bindemitteln, die insbesondere beim Mischen zugesetzt werden können, ist in Tab. 5 gezeigt.

**Tab. 5 Einfluss der Bindemittel auf die Lebensdauer des Schaums**

| | Lebensdauer des Schaumes in Minuten |
|---|---|
| Nicht granulierte Gemenge mit Feinscherben | 4 |
| Granulierte Gemenge mit Feinscherben und 20% NaOH von dem Alkali-Träger als Bindemittel | 1,5 |
| Granulierte Gemenge mit Feinscherben und 50% Ca(OH)₂ von dem Erdalkali-Träger als Bindemittel | 2,5 |

## Patentansprüche

1. Glasherstellungsverfahren zur Herstellung von Glas aus Glasrohstoffen und Scherben aufweisend die Schritte:
- Bereitstellen der Glasrohstoffe in Form eines Gemenges (10, 11, 12);
- Zerkleinern der Scherben (20) zu Feinscherben (21);
- Mischen (1) des Gemenges (10, 11, 12) und der Feinscherben (21) zu einem Standardgemenge (30);
- Agglomerieren (31) des Standardgemenges (30), **dadurch gekennzeichnet, dass**
- ein Zerkleinern der Scherben zu Feinscherben mit einer maximalen Korngröße unterhalb von 2 mm erfolgt,
- das gesamte Standardgemenge (30) agglomeriert wird, und
- der Schritt des Agglomerierens (31) durch Kompaktieren des Standardgemenges (30) durch Walzpressen in einer Walzpresse unter Verdichten des Standardgemenges bis zu einer Rohdichte des einzelnen Granulatpartikels im Bereich zwischen 1,4 und 2,5 g/cm³ erfolgt, wobei
- das Standardgemenge mit einem Feuchtigkeitsgehalt unterhalb 5 % agglomeriert wird, und
- ohne Trockenschritt für das agglomerierte Standardgemenge (30), dieses danach geschmolzen wird.

2. Glasherstellungsverfahren nach Anspruch 1, **dadurch gekennzeichnet, dass** das Gemenge (10, 11, 12) in Form eines Alkali- und/oder Erdalkali-Karbonhaltigen Gemenges bereitgestellt wird.

3. Glasherstellungsverfahren nach Anspruch 1 oder 2, **dadurch gekennzeichnet, dass** das Gemenge (10, 11, 12) Glasrohstoffe aufweist, die ausgewählt sind aus der Gruppe bestehend aus: Dolomit, Soda, Kalk, Quarz.

4. Glasherstellungsverfahren nach einem der Ansprüche 1 bis 3, **dadurch gekennzeichnet, dass** das Gemenge einen Bor-Träger, insbesondere eine borhaltige Substanz, vorzugsweise Borax oder Borsäure aufweist.

5. Glasherstellungsverfahren nach einem der Ansprüche 1 bis 4, **dadurch gekennzeichnet, dass** das Gemenge einen Blei-Träger; insbesondere eine bleihaltige Substanz, vorzugsweise Bleioxid aufweist.

6. Glasherstellungsverfahren nach einem der Ansprüche 1 bis 5, **dadurch gekennzeichnet, dass** das Gemenge (10, 11, 12) Glasrohstoffe als Normal- oder Grobglasrohstoffe, insbesondere aufweisend Sand, mit einer maximalen Korngröße bis 2mm, insbesondere bis 1mm, insbesondere oberhalb von 0.2 mm aufweist.

7. Glasherstellungsverfahren nach einem der Ansprüche 1 bis 6, **dadurch gekennzeichnet, dass** das Gemenge (10, 11, 12) Glasrohstoffe als Feinglasrohstoffe, insbesondere aufweisend Quarzmehl, mit einer maximalen Korngröße bis 0.2 mm, insbesondere bis 0.1mm, aufweist.

8. Glasherstellungsverfahren nach einem der Ansprüche 1 bis 7, **dadurch gekennzeichnet, dass** ein erster Teil (I) von Glasrohstoffen Quarz und Alkaliträger aufweist und ein zweiter Teil (II) von Glasrohstoffen ausgewählt aus der Gruppe Kalk, Dolomit ist und zum Bereitstellen des Gemenges (12) zunächst der erste Teil gemischt (I) und anschließend der zweite Teil zugemischt (II) wird.

9. Glasherstellungsverfahren nach einem der Ansprüche 1 bis 8, **dadurch gekennzeichnet, dass** ein Bindemittel (2), insbesondere ein Bindemittel (2) aufweisend Feuchtigkeit (4), Läutermittel (3) oder andere Additive, insbesondere beim Mischen (I, II, 1) und/oder Agglomerieren (31) zugegeben wird.

10. Glasherstellungsverfahren nach einem der Ansprüche 1 bis 9, **dadurch gekennzeichnet, dass** ein Zerkleinern der Scherben in einem Grobzerkleinerungsschrift zunächst auf Stücke mit einer maximalen Größe von 3 cm, insbesondere einer maximalen Größe von 2 cm, erfolgt.

11. Glasherstellungsverfahren nach einem der Ansprüche 1 bis 10, **dadurch gekennzeichnet, dass** ein Anteil von Feinscherben am Standardgemenge oberhalb 50 % liegt, insbesondere oberhalb 70 % liegt, insbesondere oberhalb 90 % liegt.

12. Glasherstellungsverfahren nach einem der Ansprüche 4 oder 5, **dadurch gekennzeichnet, dass** ein Anteil von Feinscherben an Standardgemenge unterhalb 20 %, insbesondere unterhalb 10 % liegt.

13. Glasherstellungsverfahren nach einem der Ansprüche 1 bis 12, **dadurch gekennzeichnet, dass** ein Zerkleinern der Scherben zu Feinscherben mit einer maximalen Korngröße unterhalb von 1mm erfolgt.

14. Glasherstellungsverfahren nach einem der Ansprüche 1 bis 13, **dadurch gekennzeichnet, dass** das Bindemittel In einer Menge von wenigstens 1 vol.%, insbesondere 2-4 vol.%, des Standardgemenges zugegeben wird.

15. Glasherstellungsverfahren nach einem der Ansprüche 1 bis 14, **dadurch gekennzeichnet, dass** ein Bindemittel ausgewählt ist aus der Gruppe bestehend aus: CaO, H₂O, NaOH, Ca(OH)₂, Wasserglas.

16. Glasherstellungsverfahren nach einem der Ansprüche 1 bis 15, **dadurch gekennzeichnet, dass** das Standardgemenge angefeuchtet wird, insbesondere mit einem Feuchtigkeitsanteil von 10 - 20 %, vorteilhaft 15 %.

17. Glasherstellungsverfahren nach einem der Ansprüche 1 bis 15, **dadurch gekennzeichnet, dass** das Standardgemenge mit einem Feuchtigkeitsgehalt bei oder unterhalb 3 % agglomeriert wird.

18. Glasherstellungsverfahren nach Anspruch 17, **dadurch gekennzeichnet, dass** das Standardgemenge ohne Bindemittel in der Walzpresse agglomeriert wird.

19. Glasherstellungsverfahren nach einem der Ansprüche 1 bis 18, **dadurch gekennzeichnet, dass** das Agglomerieren des Standardgemenges bis zu einer mittleren Partikelgröße von mindestens 1 mm, insbesondere bis zu einer mittleren Partikelgröße im Bereich von 2 bis 10 mm, insbesondere bis zu einer mittleren Partikelgröße im Bereich von 3 bis 8 mm erfolgt.

20. Glasherstellungsverfahren nach einem der Ansprüche 1 bis 19, **dadurch gekennzeichnet, dass** ein Verdichten des Standardgemenges bis zu einer Rohdichte des einzelnen Granulatpartikels im Bereich zwischen 1,4 und 2,1 g/cm³ erfolgt, insbesondere bis zu 2,3 g/cm³

21. Glasherstellungsverfahren nach einem der Ansprüche 1 bis 20, **dadurch gekennzeichnet, dass** ein agglomeriertes Standardgemenge getrocknet wird bis zu einem Restfeuchtigkeitsgehalt unterhalb von 3 %, insbesondere unterhalb von 2 %.

22. Glasherstellungsverfahren nach einem der Ansprüche 1 bis 21, **dadurch gekennzeichnet, dass** das Glas zu einem Glaskörper, insbesondere Floatglas (Flachglas) oder Hohlglaskörper (Behälterglas), oder einer Glasfaser hergestellt wird.

## Claims

1. Glass manufacturing process for the manufacture of glass from raw materials and cullet, comprising the steps of:
- preparing the raw materials in the form of a mixture (10, 11, 12);
- grinding the cullet (20) into fine cullet (21);
- combining (1) the mixture (10, 11, 12) and the fine cullet (21) to form a standard mixture (30);
- agglomerating (31) the standard mixture (30), **characterised in that**
- the cullet is ground into fine cullet with a maximum particle size of less than 2 mm,
- the whole of the standard mixture (30) is agglomerated, and
- the step of agglomeration (31) is carried out by compacting the standard mixture (30) by roller compaction in a roller press, the standard mixture being compacted to achieve a bulk density of the individual granulate particles in the range between 1.4 and 2.5 g/cm³, wherein
- the standard mixture having a moisture content of less than 5% is agglomerated, and
- this mixture is then melted, without a drying step for the agglomerated standard mixture (30).

2. Glass manufacturing process according to claim 1, **characterised in that** the mixture (10, 11, 12) is prepared in the form of a mixture containing alkali carbon and/or alkaline earth carbon.

3. Glass manufacturing process according to claim 1 or 2, **characterised in that** the mixture (10, 11, 12) comprises raw glassmaking materials selected from the group comprising dolomite, soda, limestone and quartz.

4. Glass manufacturing process according to one of claims 1 to 3, **characterised in that** the mixture comprises a boron carrier, particularly a boron-containing substance, preferably borax or boric acid.

5. Glass manufacturing process according to one of claims 1 to 4, **characterised in that** the mixture comprises a lead carrier, particularly a lead-containing substance, preferably lead oxide.

6. Glass manufacturing process according to one of claims 1 to 5, **characterised in that** the mixture (10, 11, 12) comprises raw glassmaking materials in the form of normal or coarse raw materials, particularly comprising sand, with a maximum particle size of up to 2 mm, particularly up to 1 mm, particularly above 0.2 mm.

7. Glass manufacturing process according to one of claims 1 to 6, **characterised in that** the mixture (10, 11, 12) comprises raw glassmaking materials in the form of fine raw materials, particularly comprising powdered quartz, with a maximum particle size of up to 0.2 mm, particularly up to 0.1 mm.

8. Glass manufacturing process according to one of claims 1 to 7, **characterised in that** a first fraction (I) of raw glassmaking materials comprises quartz and alkali carriers, and a second fraction (II) of raw materials is selected from among limestone and dolomite, and in order to prepare the mixture (12) first of all the first fraction is mixed (I) and then the second fraction is added (II).

9. Glass manufacturing process according to one of claims 1 to 8, **characterised in that** a binder (2), particularly a binder (2) comprising moisture (4), refining agents (3) or other additives, is added particularly during the mixing (I, II, 1) and/or agglomeration (31).

10. Glass manufacturing process according to one of claims 1 to 9, **characterised in that** grinding of the cullet in a coarse grinding step is initially carried out on fragments with a maximum size of 3 cm, particularly a maximum size of 2 cm.

11. Glass manufacturing process according to one of claims 1 to 10, **characterised in that** the proportion of fine cullet in the standard mixture is above 50%, particularly above 70%, more particularly above 90%.

12. Glass manufacturing process according to one of claims 4 or 5, **characterised in that** the proportion of fine cullet in the standard mixture is below 20%, particularly below 10%.

13. Glass manufacturing process according to one of claims 1 to 12, **characterised in that** the cullet is ground into fine cullet with a maximum particle size of less than 1 mm.

14. Glass manufacturing process according to one of claims 1 to 13, **characterised in that** the binder is added in an amount of at least 1 % by volume, particularly 2 - 4 % by volume, of the standard mixture.

15. Glass manufacturing process according to one of claims 1 to 14, **characterised in that** a binder is selected from among the group comprising:
CaO, H₂O, NaOH, Ca(OH)₂, water glass.

16. Glass manufacturing process according to one of claims 1 to 15, **characterised in that** the standard mixture is moistened, particularly with a proportion of moisture of 10 - 20%, advantageously 15%.

17. Glass manufacturing process according to one of claims 1 to 15, **characterised in that** the standard mixture is agglomerated with a moisture content at or below 3%.

18. Glass manufacturing process according to claim 17, **characterised in that** the standard mixture is agglomerated without binders in the roller press.

19. Glass manufacturing process according to one of claims 1 to 18, **characterised in that** the standard mixture is agglomerated to a mean particle size of at least 1 mm, particularly to a mean particle size in the range from 2 to 10 mm, especially to a mean particle size in the range from 3 to 8 mm.

20. Glass manufacturing process according to one of claims 1 to 19, **characterised in that** the standard mixture is compacted to a bulk density of the individual granulate particles in the range from 1.4 to 2.1 g/cm³, particularly up to 2.3 g/cm³.

21. Glass manufacturing process according to one of claims 1 to 20, **characterised in that** an agglomerated standard mixture is dried to a residual moisture content of less than 3%, particularly less than 2%.

22. Glass manufacturing process according to one of claims 1 to 21, **characterised in that** the glass is made into a glass body, particularly float glass (sheet glass) or hollow glass bodies (container glass), or a glass fibre.

## Revendications

1. Procédé de fabrication de verre pour produire un verre à partir de matières premières vitrifiables et de débris de verre, comprenant les étapes:
- d'apport de matières premières vitrifiables sous forme de mélange (10, 11, 12);
- de broyage des débris de verre (20) en fragments fins (21);
- de brassage (1) du mélange (10, 11, 12) et des fragments fins (21) pour former un mélange de base (30);
- d'agglomération (31) du mélange de base (30),
ce procédé étant **caractérisé en ce que**:
▪ on procède au broyage des débris de verre en fragments fins dont la dimension maximum des grains est inférieure à 2 mm,
▪ on agglomère la totalité du mélange de base (30), et
▪ l'étape d'agglomération (31) est effectuée par compaction du mélange de base (30) par pressage entre les rouleaux d'une presse à rouleaux pour densifier le mélange de base jusqu'à l'obtention d'une masse volumique des particules de granules unitaires dans une zone de valeur comprise entre 1,4 et 2,5 g/cm³,
▪ l'agglomération du mélange de base est réalisée dans des conditions d'humidification inférieure à 5%,
▪ la fusion du mélange de base aggloméré (30) est réalisée sans séchage préalable.

2. Procédé de fabrication de verre selon la revendication 1, **caractérisé en ce que** le mélange est apporté sous forme d'un mélange (10, 11, 12) de composés carbonés alcalins et/ou alcalino-terreux.

3. Procédé de fabrication de verre selon la revendication 1 ou 2, **caractérisé en ce que** le mélange (10, 11, 12) contient des matières premières vitrifiables, qui sont choisies dans le groupe constitué par la dolomite, la soude, la chaux, le quartz

4. Procédé de fabrication de verre selon l'une quelconque des revendications 1 à 3, **caractérisé en ce que** le mélange contient un composé à base de bore, en particulier une substance contenant du bore, de préférence du borax ou de l'acide borique.

5. Procédé de fabrication de verre selon l'une quelconque des revendications 1 à 4, **caractérisé en ce que** le mélange contient un composé à base de plomb, en particulier une substance contenant du plomb, de préférence de l'oxyde de plomb.

6. Procédé de fabrication de verre selon l'une quelconque des revendications 1 à 5, **caractérisé en ce que** le mélange (10, 11, 12) contient en tant que matières premières vitrifiables des matières premières vitrifiables normales ou grossières, en particulier comprenant du sable, ayant une dimension maximale des grains allant jusqu'à 2 mm, plus particulièrement jusqu'à 1 mm, en particulier supérieure à 0,2 mm.

7. Procédé de fabrication de verre selon l'une quelconque des revendications 1 à 9, **caractérisé en ce que** le mélange (10, 11, 12) contient en tant que matières premières vitrifiables des matières premières vitrifiables fines, en particulier comprenant de la farine de silice, dont la dimension maximale des grains peut atteindre 0,2 mm, plus particulièrement 0,1 mm.

8. Procédé de fabrication de verre selon l'une quelconque des revendications 1 à 7, **caractérisé en ce qu'**une première partie (I) de matières premières vitrifiables à base de quartz et de composé alcalin et **en ce que** une deuxième partie (II) de matières premières vitrifiables choisies dans le groupe constitué par la chaux, consiste en dolomite, et que pour l'obtention du mélange (12) est ajoutée d'abord la première partie (I) puis est ensuite additionnée la seconde partie (II).

9. Procédé de fabrication de verre selon l'une quelconque des revendications 1 à 8, **caractérisé en ce qu'**est ajouté un liant (2), en particulier un liant (2) présentant un caractère humide (4), un eutectique (3) ou autres additifs, notamment au cours du mélange (I, II, 1) et/ou de l'agglomération (31).

10. Procédé de fabrication de verre selon l'une quelconque des revendications 1 à 9, **caractérisé en ce qu'**un broyage des débris de verre est réalisé dans une première étape de broyage grossier tout d'abord sur des fragments ayant une dimension maximale de 3 cm, en particulier une dimension maximale de 2 cm.

11. Procédé de fabrication de verre selon l'une quelconque des revendications 1 à 10, **caractérisé en ce que** la proportion des fragments fins dans le mélange de base est supérieure à 50%, en particulier supérieure à 70%, notamment supérieure à 90%.

12. Procédé de fabrication de verre selon l'une des revendications 4 ou 5, **caractérisé en ce qu'**une proportion des fragments fins dans le mélange de base est inférieure à 20%, en particulier inférieure à 10%.

13. Procédé de fabrication de verre selon l'une quelconque des revendications 1 à 12, **caractérisé en ce que** la réduction de dimension des débris de verre en fragments fins conduit à une dimension de grains maximum inférieure à 1 mm.

14. Procédé de fabrication de verre selon l'une quelconque des revendications 1 à 13, **caractérisé en ce que** le liant est ajouté en une quantité d'au moins 1% en volume, en particulier de 2 à 4% en volume, par rapport au mélange de base.

15. Procédé de fabrication de verre selon l'une quelconque des revendications 1 à 14, **caractérisé en ce que** le liant est choisi dans le groupe consistant en: CaO, H₂O, NaOH, Ca(OH)₂, le verre soluble aussi appelé waterglass.

16. Procédé de fabrication de verre selon l'une quelconque des revendications 1 à 15, **caractérisé en ce que** le mélange de base est humidifié, en particulier avec un taux d'humidité de 10-20%, avantageusement de 15%.

17. Procédé de fabrication de verre selon l'une quelconque des revendications 1 à 15, **caractérisé en ce que** le taux d'humidité lors de l'agglomération du mélange de base est inférieur à 5%, en particulier inférieur à 3%.

18. Procédé de fabrication de verre selon la revendication 17, **caractérisé en ce que** le mélange de base est aggloméré sans ajouts de liants dans la presse à rouleaux.

19. Procédé de fabrication de verre selon l'une quelconque des revendications 1 à 18, **caractérisé en ce que** l'agglomération du mélange de base est effectué jusqu'à l'obtention d'une dimension moyenne des particules d'au moins 1 mm, plus particulièrement jusqu'à une dimension moyenne des particules comprise entre 2 et 10 mm, notamment jusqu'à une dimension moyenne des particules comprise entre 3 et 8 mm.

20. Procédé de fabrication de verre selon l'une quelconque des revendications 1 à 19, **caractérisé en ce qu'**est effectué un compactage du mélange de base jusqu'à l'obtention d'une masse volumique des particules de granules unitaires comprise entre 1,4 et 2,1 g/cm³, et de préférence inférieure à 2,3 g/cm³.

21. Procédé de fabrication de verre selon l'une quelconque des revendications 1 à 20, **caractérisé en ce que** le mélange de base aggloméré est séché jusqu'à ce que la teneur en humidité résiduelle soit inférieure à 3%, en particulier inférieure à 2%.

22. Procédé de fabrication de verre selon l'une quelconque des revendications 1 à 21, **caractérisé en ce que** le verre obtenu est transformé en produits verriers, en particulier en verre plat (verre de la plaque) ou corps creux (récipients) ou fibres de verre.
